# DEMANDE DE BREVET EUROPEEN

(11) **EP 4 387 167 A1**
(43) Date de publication de la demande: **19.06.2024**
(21) Numéro de dépôt: 22306883.4
(22) Date de dépôt: 15.12.2022
(51) Int. Cl.: H04L 9/40, H04W 12/062, H04W 12/77

(54) **PROCÉDÉ ET SYSTÈME D'AUTHENTIFICATION D'UN UTILISATEUR AUPRÈS D'UN SERVEUR D'AUTHENTIFICATION**

(71) Demandeur: BULL SAS, 78340 Les Clayes-Sous-Bois (FR)
(72) Inventeur: GUIONNEAU, Christophe, 38000 GRENOBLE (FR); SAMUEL, Mamuye, 38100 GRENOBLE (FR)
(74) Mandataire: IPAZ

(57) **Abrégé**

L'invention concerne un procédé (200) d'authentification d'un utilisateur au niveau d'un premier appareil comprenant les étapes suivantes :
- émission (212), par un client d'authentification dudit premier appareil ou de ladite application, à un serveur d'authentification (308), d'une requête d'authentification,
- en réponse à ladite requête d'authentification, émission (216) par le serveur d'authentification (308) d'un premier message comprenant une URL d'authentification et un identifiant de transaction,
- ouverture (218) de ladite URL dans un navigateur web exécuté par un deuxième appareil utilisateur (310), préalablement enrôlé auprès dudit serveur d'authentification (308),
- vérification (222) de l'identité dudit utilisateur par ledit deuxième appareil utilisateur (310), et
- lorsque ladite vérification est réussie, fourniture (224) par ledit deuxième appareil utilisateur (310) audit serveur d'authentification (308), d'une preuve d'enrôlement mémorisée dans ledit deuxième appareil (310) lors de l'enrôlement dudit deuxième appareil (310), pour authentifier ledit utilisateur.

Elle concerne également un programme d'ordinateur et un système mettant en oeuvre un tel procédé.

## Description

La présente invention concerne un procédé d'authentification d'un utilisateur, avec un deuxième appareil utilisateur, pour autoriser l'accès dudit utilisateur à un premier appareil ou à une application avec ledit premier appareil utilisateur. Elle concerne également un programme d'ordinateur et système mettant en oeuvre un tel procédé.

Le domaine de l'invention est le domaine de l'authentification d'un utilisateur auprès d'un serveur d'authentification pour ouvrir une session d'accès à un appareil, ou une session d'accès à une application avec ledit appareil.

### État de la technique

L'accès d'un utilisateur à son poste de travail, ou à une application locale exécutée sur son poste de travail, ou encore une application web au travers de sont poste de travail nécessite une authentification de l'utilisateur. Les mécanismes d'authentification classiques reposent sur l'utilisation de données d'authentification comprenant généralement un identifiant et d'un mot de passe.

Or, la faiblesse de l'utilisation des mots de passe n'est plus à démontrer. Pour augmenter la sécurité d'authentification, un mécanisme d'authentification multi-facteur a été mis en place, basé sur le principe « ce que je sais, ce que je possède ». Un tel mécanisme permet de faire intervenir un objet possédé, tel qu'un Smartphone, dans la chaîne d'authentification, éventuellement en plus de l'usage d'un mot de passe, ce qui augmente considérablement la sécurité de l'authentification.

Un type de mécanisme d'authentification multi-facteurs utilise le Smartphone, et plus généralement un objet connecté, comme objet possédé. Ce type de mécanisme n'est pas suffisamment sécurisé car il se base sur des de codes à usage unique émis vers le Smartphone de l'utilisateur, et qui transite par une infrastructure tierce non-maîtrisée.

Un autre type de mécanisme d'authentification multi-facteurs met en oeuvre un appareil dédié, tel qu'une clef USB ou un boîtier à carte, en alternative au Smartphone. Cet appareil dédié génère localement un code à usage unique. Bien que plus sécurisé, ce type de mécanisme est plus onéreux et plus lourd à déployer.

Encore un autre type de mécanisme d'authentification multi-facteurs se base sur des notifications de type push affichées sur une application dédiée installée sur le Smartphone. Ce type de mécanisme, tout en restant lourde et coûteuse, souffre d'une faiblesse de sécurité car il permet de submerger l'utilisateur par une multitude de notifications amenant l'utilisateur à valider par erreur une demande d'authentification frauduleuse.

Un but de la présente invention est de remédier à au moins un des inconvénients précités.

Un autre but de la présente invention est de proposer une solution d'authentification d'un utilisateur plus sécurisée comparée au mécanisme d'authentification utilisant un objet connecté.

Il est aussi un but de la présente invention de proposer une solution d'authentification d'un utilisateur moins onéreuse et moins lourd à déployer comparée aux mécanismes d'authentification utilisant un appareil dédié.

Il est en outre un but de la présente invention de proposer une solution d'authentification d'un utilisateur plus sécurisée, tout en étant moins onéreuse et moins lourd à déployer.

### Exposé de l'invention

L'invention permet d'atteindre au moins l'un des buts précités par un procédé d'authentification d'un utilisateur auprès d'un serveur d'authentification, pour accéder à un premier appareil utilisateur, ou à une application avec ledit premier appareil, ledit procédé comprenant au moins une itération d'une phase d'authentification comprenant les étapes suivantes :
- émission, par un client d'authentification dudit premier appareil ou de ladite application, audit serveur d'authentification, d'une requête d'authentification,
- en réponse à ladite requête d'authentification, émission par le serveur d'authentification d'un premier message comprenant une URL d'authentification et un identifiant de transaction,
- ouverture de ladite URL dans un navigateur web exécuté par un deuxième appareil utilisateur, préalablement enrôlé auprès dudit serveur d'authentification,
- vérification de l'identité dudit utilisateur par ledit deuxième appareil utilisateur, et
- lorsque ladite vérification est réussie, fourniture par ledit deuxième appareil utilisateur audit serveur d'authentification, d'une preuve d'enrôlement mémorisée dans ledit deuxième appareil lors de l'enrôlement dudit deuxième appareil, pour authentifier ledit utilisateur.

En d'autres termes, l'invention propose, pour un utilisateur souhaitant ouvrir une session d'accès à un premier appareil utilisateur, ou souhaitant accéder à une application sur un premier appareil, de réaliser cette authentification sur un deuxième appareil utilisateur, de manière similaire aux mécanismes d'authentification multi-facteurs de l'état de la technique utilisant un objet connecté tel qu'un Smartphone. Cependant, à la différence de ces mécanismes d'authentification, l'invention propose d'enrôler le deuxième appareil auprès du serveur d'authentification et de mémoriser, localement audit deuxième appareil, une preuve d'enrôlement qui peut ensuite être utilisée lors d'une ou plusieurs authentifications de l'utilisateur. Ainsi, l'invention permet une authentification plus sécurisée car elle évite l'utilisation d'une infrastructure tierce non maîtrisée, ou d'une application dédiée émettant des notifications push pouvant submerger l'utilisateur.

De plus, l'invention permet une authentification moins lourde et moins coûteuse à mettre en oeuvre car elle évite l'utilisation, côté utilisateur, d'un dispositif dédié ou encore d'une application dédiée puisque l'authentification de l'utilisateur sur le deuxième appareil utilisateur se fait au travers d'un navigateur web, classiquement installé sur tout appareil connecté de type Smartphone ou tablette.

La présente invention peut être mise en oeuvre pour authentifier un utilisateur en vue de l'accès dudit utilisateur au premier appareil. Dans ce cas, l'authentification permet d'ouvrir une session sur le premier appareil, c'est-à-dire d'autoriser l'utilisateur à utiliser ledit premier appareil. Autrement dit, l'invention est mise en oeuvre avant que l'utilisateur n'ait accédé au premier appareil.

Dans ce mode de réalisation, le client d'authentification peut être un client d'authentification du premier appareil et installé sur ledit premier appareil.

Dans ce mode de réalisation, une requête d'accès audit premier appareil peut être formulée directement auprès du client d'authentification, ou au travers d'une interface, ou d'un client d'accès, en communication avec le client d'authentification.

La présente invention peut être mise en oeuvre pour authentifier un utilisateur en vue de l'accès dudit utilisateur à une application, dite locale, installée sur ledit premier appareil. Dans ce cas, l'invention est mise en oeuvre après que l'utilisateur a accédé au premier appareil.

Dans ce mode de réalisation, le client d'authentification peut être un client d'authentification de l'application locale, et installé sur ledit premier appareil.

Dans ce mode de réalisation, une requête d'accès à l'application locale peut être formulée directement auprès du client d'authentification, ou au travers d'une interface, ou d'un client d'accès, en communication avec le client d'authentification.

La présente invention peut être mise en oeuvre pour authentifier un utilisateur en vue de l'accès dudit utilisateur à une application, dite application distante ou application web, hébergée sur un serveur d'application accessible au travers d'un réseau de communication, tel que le réseau Internet. Dans ce cas, l'invention est mise en oeuvre après que l'utilisateur a accédé au premier appareil.

Dans ce mode de réalisation, le client d'authentification peut être un client d'authentification de l'application distante, installé sur ledit serveur d'application.

L'application web peut être accessible au travers d'un navigateur web exécuté par le premier appareil. Dans ce cas, une requête d'accès à ladite application distante peut être formulée au travers dudit navigateur web.

Alternativement, ou en plus, l'application web peut être accessible au travers d'un module client installé sur le premier appareil. Dans ce cas, une requête d'accès à ladite application distante peut être formulée au travers dudit module client.

Suivant une caractéristique avantageuse, le procédé selon l'invention peut comprendre, avant la première itération de la phase d'authentification, une phase d'enrôlement du deuxième appareil auprès du serveur d'authentification en association avec l'utilisateur, ladite phase d'enrôlement produisant une preuve d'enrôlement mémorisée dans ledit deuxième appareil utilisateur.

La phase d'enrôlement peut être réitérée pour plusieurs deuxièmes appareils utilisateurs de sorte à enrôler plusieurs appareils utilisateur pouvant être utilisés dans le procédé selon l'invention. Par exemple, l'utilisateur peut enrôler un Smartphone et une tablette comme deuxièmes appareils utilisateurs pour pouvoir les utiliser l'un ou l'autre lors d'une phase d'authentification. Dans ce cas, la phase d'enrôlement est réalisée individuellement et indépendamment pour chaque appareil utilisateur, à savoir pour la tablette et pour le Smartphone.

La preuve d'enrôlement est spécifique et individuelle pour chaque deuxième appareil utilisateur.

La preuve d'enrôlement peut être tout type de preuve utilisable lors d'une phase d'authentification.

Suivant des exemples de réalisation non limitatifs, la preuve d'enrôlement peut être un jeton à usage unique, ou de préférence un jeton réutilisable, un certificat d'authentification, etc.

La preuve d'enrôlement peut être produite directement par le serveur d'authentification et transmise au deuxième appareil utilisateur. Alternativement, la preuve d'enrôlement peut être produite par le deuxième appareil utilisateur à partir de données fournies par le serveur d'authentification.

La phase d'enrôlement peut réaliser un enrôlement suivant toutes techniques d'enrôlement.

Suivant des exemples de réalisation, la phase d'enrôlement peut réaliser un enrôlement de type FIDO auprès du serveur d'authentification, dont la clef privée est enregistrée dans le deuxième appareil. Dans ce cas, la preuve d'enrôlement est la clef privée mémorisée au niveau du deuxième appareil utilisateur, et pour laquelle une clef publique est mémorisée au niveau du serveur d'authentification.

Suivant des exemples de réalisation, la phase d'enrôlement peut réaliser un enrôlement de type certificat client X509 dont le nom, et/ou le numéro de série, est enregistré dans le serveur d'authentification et dont la clef privée est enregistrée dans le deuxième appareil.

Suivant des modes de réalisation, la phase d'enrôlement peut comprendre en outre une mémorisation, dans ledit deuxième appareil utilisateur, d'un identifiant dudit utilisateur.

Dans ce cas, l'identifiant de l'utilisateur peut être mémorisée dans le deuxième appareil utilisateur en association avec la preuve d'enrôlement.

Alternativement, l'identifiant de l'utilisateur peut ne pas être enregistré en association avec la preuve d'enrôlement. Cela permet d'utiliser le deuxième appareil enrôlé pour plusieurs utilisateurs, ou identifiants utilisateurs.

La phase d'enrôlement peut être de préférence réalisée au travers d'une page web d'enrôlement ouverte dans un navigateur exécuté par le deuxième appareil utilisateur.

Une adresse URL de la page d'enrôlement peut être codé dans un QR-code et scanné par le deuxième appareil utilisateur pour lancer ladite page d'enrôlement. Le QR-code peut être affiché sur le premier appareil utilisateur, ou sur une page Internet du serveur d'authentification, ou sur tout autre appareil.

Dans un exemple de réalisation pratique mais nullement limitatif, l'utilisateur accède, avec un autre appareil que le deuxième appareil utilisateur, à une page web du serveur d'authentification et indique son intention de réaliser une phase d'enrôlement d'un deuxième appareil utilisateur, par exemple en appuyant sur un bouton affiché dans cette page. Le serveur d'authentification génère un QR code comprenant l'adresse URL de la page d'enrôlement : ce QR-code est scanné par le deuxième appareil utilisateur, qui lance l'affichage de la page d'enrôlement dans un navigateur du deuxième appareil.

De manière générale, la phase d'enrôlement a pour objectif de faire le lien entre l'utilisateur et le deuxième appareil utilisateur de sorte que ledit deuxième appareil utilisateur peut être utilisé comme objet possédé dans le cadre d'une authentification forte.

Pour ce faire, de préférence mais de manière nullement limitative, l'identifiant de l'utilisateur peut être mémorisée avec une donnée, ou un identifiant, d'enrôlement dans le serveur d'authentification. Lorsque, la preuve d'enrôlement mémorisée dans le deuxième appareil utilisateur est une clef privée, alors la donnée ou l'identifiant d'enrôlement mémorisé(e) dans le serveur d'authentification en association avec l'identifiant de l'utilisateur comprend, ou consiste en, la clef publique associée à ladite clef privée.

Suivant des modes de réalisation, le premier message peut être transmis par le serveur d'authentification, directement au deuxième appareil utilisateur.

Dans ce cas, le deuxième appareil accède à l'URL d'authentification et à l'identifiant de transaction qui se trouvent dans le premier message ainsi reçu.

Alternativement, ou en plus, le premier message peut être transmis par le serveur d'authentification au client d'authentification.

Dans ce cas, l'URL d'authentification et l'identifiant de transaction, peuvent être transmis par ledit client d'authentification au deuxième appareil.

Si le client d'authentification se trouve sur le premier appareil, alors le premier message est envoyé par le serveur d'authentification audit premier appareil. L'URL d'authentification et l'identifiant de transaction peuvent alors être transmis par ledit premier appareil audit deuxième appareil.

Si le client d'authentification se trouve sur le serveur d'application, alors le premier message est envoyé par le serveur d'authentification audit serveur d'authentification. L'URL d'authentification et l'identifiant de transaction peuvent alors être transmis par ledit serveur d'application audit deuxième appareil, directement ou par l'intermédiaire d'un autre appareil, tel que par exemple le premier appareil.

Ainsi, indépendamment de la localisation du client d'authentification, l'URL d'authentification et l'identifiant de transaction peuvent être transmis au deuxième appareil par l'intermédiaire du premier appareil.

En outre, indépendamment de la localisation du client d'authentification, l'URL de transaction et l'identifiant de transaction peuvent être transmis au deuxième appareil de différentes manières :
- soit en transmettant ledit premier message audit deuxième appareil dans sa totalité ; ou
- soit l'URL de transaction et l'identifiant de transaction peuvent d'abord être extraits dudit premier message, et transmis au deuxième appareil.

De manière générale, l'URL d'authentification et l'identifiant de transaction, peuvent être transmis au deuxième appareil utilisateur sous toute forme, telle que par exemple sous la forme d'un courriel, d'un message téléphonique, etc.

L'URL d'authentification et l'identifiant de transaction peuvent être transmis au premier appareil utilisateur :
- au travers d'un réseau de communication, par exemple de type Internet ; ou
- au travers d'une connexion locale entre le premier et le deuxième appareil, en particulier lorsqu'ils sont transmis au deuxième appareil par le premier appareil, par exemple une connexion locale de type Bluetooth, en particulier .

Suivant des modes de réalisation, la transmission de l'URL d'authentification et de l'identifiant de transaction au deuxième appareil peut être réalisée au travers d'un QR-code affiché au niveau dudit, ou par ledit, premier appareil utilisateur et scanné par ledit deuxième appareil utilisateur. Dans ce cas le QR code comprend l'URL d'authentification et de l'identifiant de transaction, et éventuellement d'autres données, telles par exemples des données contenues dans le premier message.

Le QR-code peut être généré par le premier appareil. Alternativement, le QR-code peut être généré par :
- le serveur d'authentification, ou
- Le client d'authentification ; et transmis au premier appareil et affiché par le premier appareil.

Suivant des modes de réalisation, l'étape de vérification de l'identité de l'utilisateur par le deuxième appareil peut comprendre une fourniture, par ledit utilisateur audit deuxième appareil, d'une donnée de sécurité préalablement mémorisée dans ledit deuxième appareil, tel que par exemple un mot de passe, ou une donnée biométrique, pour déverrouiller ledit deuxième appareil.

Il est à noter que l'étape de vérification de l'identité de l'utilisateur par le deuxième appareil est réalisée en fonction des données préalablement mémorisées dans ledit deuxième appareil, sans aucune interaction avec le serveur d'authentification. Cette étape de vérification est complètement indépendante du serveur d'authentification.

Préférentiellement, cette étape de vérification a pour but de vérifier que l'utilisateur est autorisé à utiliser le deuxième appareil.

Cette étape de vérification est de préférence réalisée localement au niveau dudit deuxième appareil.

Suivant des modes de réalisation, la phase d'authentification peut comprendre, après une vérification réussie de l'identité de l'utilisateur par le deuxième appareil, une étape d'émission par ledit deuxième appareil audit serveur d'authentification d'un deuxième message comprenant :
- l'identifiant de transaction, et
- une preuve d'enrôlement associée audit deuxième appareil,
- et éventuellement un identifiant d'utilisateur et/ou une preuve de vérification.

En effet, lorsque l'identité de l'utilisateur est vérifiée avec succès par le deuxième appareil, ce dernier utilise la preuve d'enrôlement, éventuellement en association avec un identifiant d'utilisateur mémorisé dans ledit appareil utilisateur, ou fourni par l'utilisateur, pour confirmer l'identité de l'utilisateur au serveur d'authentification. La preuve d'enrôlement et l'identifiant de transaction (et éventuellement l'identifiant de l'utilisateur et/ou une preuve de vérification de l'identité de l'utilisateur) sont alors fournis au serveur d'authentification. Ce dernier peut alors vérifier la preuve d'enrôlement. Si cette dernière est valide alors le serveur d'authentification retrouve la requête d'authentification avec l'identifiant de transaction et considère l'utilisateur comme identifié.

Suivant des modes de réalisation, le deuxième message peut en outre comprendre des données contextuelles relatives à la vérification de l'identité de l'utilisateur telles que par exemple :
- une nature de la donnée utilisée pour vérifier l'identité de l'utilisateur : mot de passe, donnée biométrique, etc. ;
- un protocole de vérification utilisé ;
- une donnée horaire de vérification ;
- une donnée de géolocalisation du deuxième appareil au moment de la vérification,
- le système d'exploitation du deuxième appareil ;
- etc.

Suivant des modes de réalisation, suite à une authentification réussie, la phase d'authentification peut comprendre une étape de confirmation d'authentification, par le serveur d'authentification.

Cette étape de confirmation peut comprendre une émission par ledit serveur d'authentification au client d'authentification, d'un troisième message comprenant une donnée de confirmation d'authentification et éventuellement un identifiant de l'utilisateur.

Ainsi, le client d'authentification se trouvant au niveau du deuxième appareil, et/ou du serveur d'application, reçoit une confirmation pour la requête d'authentification. Cette confirmation peut être utilisée pour :
- donner accès à l'application pour cet utilisateur, c'est-à-dire à l'application locale ou à l'application web, par exemple en ouvrant une session de l'application pour l'utilisateur ; ou
- donner accès au premier appareil pour cet utilisateur, par exemple en ouvrant une session d'accès audit premier appareil pour cet utilisateur

Le procédé selon l'invention peut comprendre, suite à la phase d'authentification, une étape d'ouverture, pour l'utilisateur, d'une session d'accès à l'application, locale ou distante, ou au premier appareil, en cas d'authentification réussie.

Cette ouverture de sessions peut être réalisée selon tout type de mécanismes connus.

L'identifiant de l'utilisateur, également appelé identifiant d'utilisateur ou identifiant utilisateur, peut être fourni par l'utilisateur au début ou pendant la phase d'authentification. L'identifiant peut être fourni au premier appareil utilisateur, et/ou au deuxième appareil utilisateur.

Alternativement, l'identifiant de l'utilisateur peut être mémorisé dans le premier appareil utilisateur, et/ou le deuxième appareil utilisateur, et/ou dans le serveur d'authentification ou encore dans le client d'authentification. Dans ce cas, l'identifiant utilisateur peut avoir été fourni lors d'une phase d'authentification précédente ou lors d'une phase d'enrôlement.

Lorsque l'identifiant d'utilisateur est connu du premier appareil utilisateur (soit parce qu'il est fourni par l'utilisateur lors de la phase d'authentification en cours soit parce qu'il a été préalablement mémorisé), ledit identifiant d'utilisateur peut être transmis par ledit premier appareil utilisateur au deuxième appareil utilisateur, par exemple dans le premier message. L'identifiant utilisateur devient alors connu par le deuxième appareil utilisateur, qui peut optionnellement le mémoriser dans ledit deuxième appareil. Cet identifiant utilisateur peut alors être communiqué par le deuxième appareil utilisateur au serveur d'authentification, par exemple dans le deuxième message.

Lorsque l'identifiant d'utilisateur est connu du deuxième appareil utilisateur :
- soit parce qu'il a été fourni par l'utilisateur, ou par le premier appareil, lors de la phase d'authentification en cours,
- soit parce qu'il a été préalablement mémorisé, par exemple lors d'une phase d'enrôlement ou lors d'une précédente phase d'authentification,
ledit identifiant utilisateur peut être optionnellement mémorisé dans ledit deuxième appareil. Cet identifiant utilisateur peut alors communiqué par le deuxième appareil utilisateur au serveur d'authentification, par exemple dans le deuxième message.

Suivant un autre aspect de la présente invention, il est proposé un programme d'ordinateur comprenant des instructions informatiques, qui lorsqu'elles sont exécutées par ordinateur, mettent en oeuvre les étapes du procédé d'authentification selon l'invention.

Le programme d'ordinateur peut être en langage machine, en C, C++, JAVA, Python, et plus généralement tout type de langage informatique.

Le programme d'ordinateur peut être un unique programme, ou un ensemble de plusieurs programmes communicants ensemble. Par exemple, le programme d'ordinateur peut comprendre :
- un module serveur exécuté au niveau du serveur d'authentification,
- un premier module client exécuté au niveau du premier appareil utilisateur, et
- éventuellement un deuxième module client au niveau du deuxième appareil utilisateur.

Système d'authentification d'un utilisateur auprès d'un serveur d'authentification, pour accéder :
- à un premier appareil utilisateur, ou
- à une application avec ledit premier appareil ; ledit système comprenant :
   - un premier appareil utilisateur,
   - un serveur d'authentification,
   - un deuxième appareil utilisateur comprenant un navigateur web, et
   - un client d'authentification ;
configurés pour mettre en oeuvre toutes les étapes du procédé d'authentification selon l'invention.

En particulier, le premier appareil utilisateur peut être un ordinateur, une tablette, un Smartphone, un télévision connectée, une montre connectée, un véhicule connecté, etc.

En particulier, le deuxième appareil utilisateur peut être un ordinateur, une tablette, un Smartphone, etc. Dans un mode de réalisation particulier et nullement limitatif, le deuxième appareil utilisateur est un appareil portable de type tablette Smartphone.

Le système peut comprendre en outre un serveur d'application, dans le cas où il est utilisé pour l'accès à une application distante hébergée sur ledit serveur d'application.

Dans tous les cas, le système comprend un client d'authentification, se présentant sous une forme logicielle.

Ce client d'authentification peut être installé :
- sur le premier appareil utilisateur, lorsque le système selon l'invention est utilisé pour authentifier l'utilisateur en vue d'un accès audit premier appareil, ou à une application locales ou encore à une application distante ;
- sur un serveur d'application, lorsque le système selon l'invention est utilisé pour authentifier l'utilisateur en vue d'un accès à une application distante hébergée sur ledit serveur d'application.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'une phase d'enrôlement pouvant être mise en oeuvre dans un procédé d'authentification selon l'invention ;
- la FIGURE 2 est une représentation schématique d'un exemple de réalisation non limitatif d'un procédé d'authentification selon l'invention ; et
- les FIGURES 3-5 sont des représentations schématiques de trois exemples de réalisation non limitatifs d'un système d'authentification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

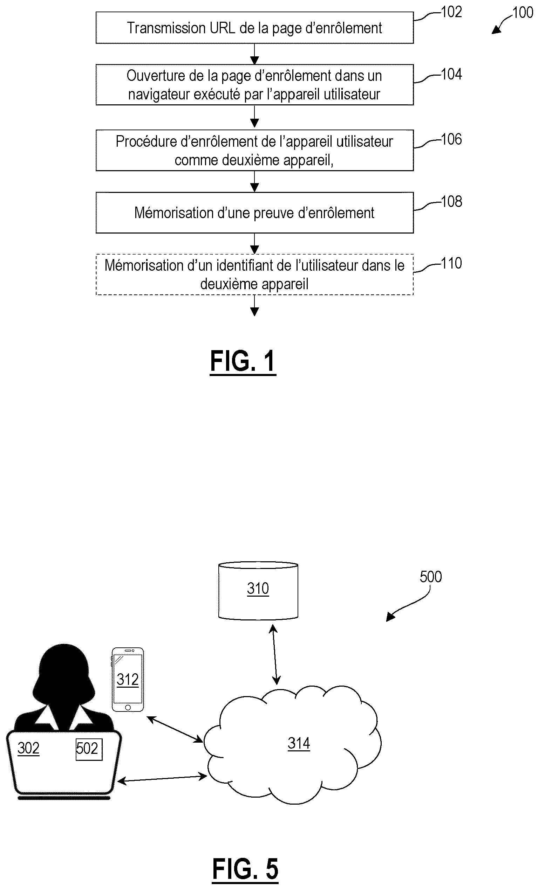

La FIGURE 1 est une représentation schématique d'un exemple de réalisation non limitatif d'une phase d'enrôlement pouvant être mise en oeuvre dans un procédé d'authentification selon l'invention.

La phase d'enrôlement 100, représentée sur la FIGURE 1, peut être mise en oeuvre pour enrôler un appareil utilisateur en tant que deuxième appareil dans le cadre de la présente invention.

Suivant des modes de réalisation, la phase d'enrôlement 100 peut être réalisée indépendamment d'une phase d'authentification, c'est-à-dire sans initier une phase d'authentification.

Suivant d'autres modes de réalisation, la phase d'enrôlement 100 peut être réalisée au début de, ou juste avant, une phase d'authentification, par exemple suite à l'étape d'émission d'une demande d'authentification. Dans ce cas, l'utilisateur déclenche l'exécution de la phase d'enrôlement 100. Alternativement, lorsqu'aucun appareil utilisateur n'a encore été enrôlé pour un utilisateur, la phase d'enrôlement 100 peut être proposée ou exécutée automatiquement.

En tous cas, la phase d'enrôlement 100 est réalisée individuellement pour un appareil utilisateur et peut être réitérée autant de fois que souhaité pour enrôler plusieurs appareils utilisateurs comme deuxièmes appareils.

La phase d'enrôlement 100 est réalisée au travers d'une page internet d'enrôlement du serveur d'authentification.

Lors d'une étape 102, l'URL de la page d'enrôlement est communiquée à l'appareil utilisateur qui doit être enrôlé comme deuxième appareil. L'URL de la page d'enrôlement peut être communiquée à l'appareil utilisateur de toute manière connue. Suivant un exemple non limitatif, l'URL peut être communiquée à l'appareil utilisateur par un message envoyé au deuxième appareil utilisateur, tel que par exemple un courriel, respectivement un message téléphonique : dans ce cas, l'utilisateur a communiqué une adresse mail, respectivement un numéro de téléphone associé à l'appareil utilisateur. Suivant un autre exemple non limitatif, l'URL peut être encodé dans un QR-code scanné par l'appareil utilisateur. Le QR-code peut être généré et affiché par le serveur d'authentification, par exemple dans un navigateur exécuté par un autre appareil que l'appareil utilisateur. Suivant encore un autre exemple de réalisation, l'URL peut être affiché dans une page du serveur d'authentification, tel que par exemple une page d'accueil.

Optionnellement, il peut être souhaitable de s'assurer que l'utilisateur est autorisé à enrôler un appareil. Dans ce cas, l'URL peut être protégée par authentification forte, tel que par exemple par un mot passe suivi d'un mot de passe à usage unique, OTP (pour « One Time Password »). Alternativement, ou en plus, l'URL peut elle-même comprendre un code unique, en particulier lorsque l'URL est disponible sous la forme d'un code QR.

Lors d'une étape 104, l'appareil utilisateur ouvre l'URL de la page d'enrôlement dans un navigateur Web.

L'ouverture de la page d'enrôlement déclenche l'exécution d'une procédure d'enrôlement réalisée lors d'une étape 106.

La procédure d'enrôlement peut par exemple être une procédure d'enrôlement permettant l'enregistrement de l' appareil utilisateur comme clef FIDO. Dans ce cas, une succession d'interactions selon le protocole WebAuthn entre le navigateur Web de l'appareil utilisateur et le serveur d'authentification, génère une paire de clés dédiées aux connections vers le serveur d'authentification. L'implémentation FIDO (WebAuthn) peut différer d'un appareil à un autre en fonction de la version de l'appareil utilisateur et du modèle, dans certain cas l'usage de la clé FIDO peut être protégée par empreinte digitale, par reconnaissance faciale, ou par PIN code/schéma. Le protocole FIDO/WebAuthn enregistre la clé publique du serveur d'authentification dans le navigateur, elle sera comparée et utilisée pendant la phase d'authentification utilisant l'appareil utilisateur comme deuxième appareil.

La procédure d'enrôlement peut ne pas être un enrôlement permettant d'utiliser le deuxième appareil comme clef FIDO mais un enrôlement de type certificat, tel qu'un certificat client X509, dont le nom/numéro-de-série est enregistré par le serveur d'authentification, et dont la clé privée est enregistrée dans, et de préférence protégée par, l'appareil utilisateur. Dans ce cas, le certificat constitue la preuve d'enrôlement et son usage, lors d'une phase d'authentification, sera conditionné à une authentification locale de l'utilisateur sur le deuxième appareil.

En tous cas, lors de cette procédure d'enrôlement du deuxième appareil l'utilisateur renseigne ses données d'identification, telles que par exemple son identifiant et son mot de passe. Ces données d'identification sont déjà connues du serveur d'authentification. Elles permettent au serveur d'authentification de confirmer l'identité de l'utilisateur et aussi d'indiquer à quel utilisateur ce deuxième appareil est associé.

Après l'étape d'enrôlement 106, lors d'une étape 108, une preuve d'enrôlement est mémorisée localement dans l'appareil utilisateur, par exemple un cookie permanent, une clef ou un certificat, mémorisé(e) localement dans le navigateur web exécuté par l'appareil de l'utilisateur. La preuve d'authentification peut se présenter sous une autre forme que celles indiquées.

De plus, lors de cette étape 108, une preuve d'enrôlement du deuxième appareil, par exemple une clef publique, est mémorisée en association avec l'identifiant de l'utilisateur dans le serveur d'authentification.

Optionnellement, lors d'une étape 110, réalisée en même temps ou juste après l'étape 108, une information contenant l'identifiant de l'utilisateur peut être mémorisée dans le stockage local du navigateur web. Cela permettra de ne pas redemander cet identifiant pendant une phase d'authentification. Ces données peuvent être chiffrées par le serveur d'authentification pour éviter toute extraction du navigateur. Suivant une alternative, un identifiant opaque peut aussi être enregistré selon les mécanismes FIDO disponibles, il sera transmis automatiquement lors d'une authentification FIDO et sera utilisé pour faire le lien avec l'identifiant réel de l'utilisateur.

L'appareil utilisateur peut alors être utilisé comme deuxième appareil lors d'une ou plusieurs itérations d'une phase d'authentification selon l'invention.

L'utilisateur peut enrôler plusieurs appareils utilisateur pour les utiliser comme deuxième appareil utilisateur. Pour ce faire, les étapes 102-110 doivent être réitérées pour chaque appareil utilisateur .

Le serveur d'authentification peut comprendre une interface utilisateur permettant d'ajouter un nouveau deuxième appareil ou de supprimer un deuxième appareil préalablement enrôlé.

De préférence, au moins un deuxième appareil est un Smartphone ou une tablette.

Bien entendu, d'autres informations/données peuvent être échangées entre le serveur d'authentification et le deuxième appareil lors de la phase d'enrôlement, tel que par exemple la nature de l'appareil, le type de système d'exploitation utilisé par l'appareil, la date, l'heure, la géolocalisation de l'appareil, un identifiant de l'application web pour lequel le deuxième appareil peut être utilisé pour lors d'une phase d'authentification, etc.

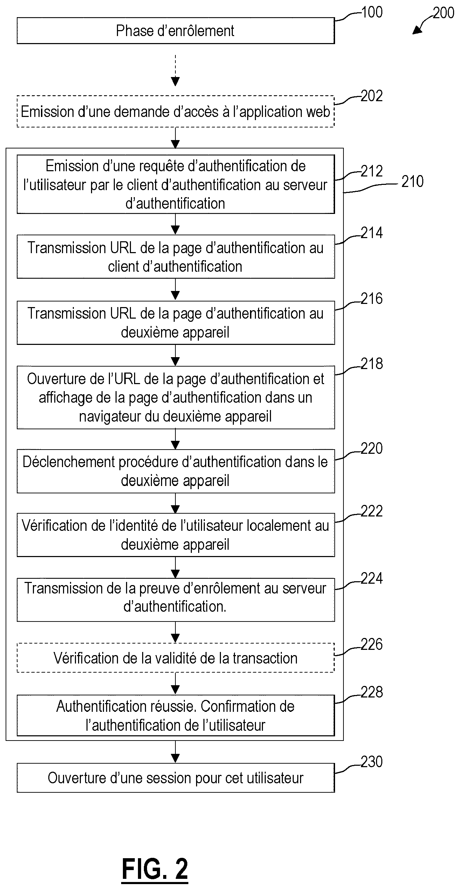

La FIGURE 2 est une représentation schématique d'un exemple de réalisation non limitatif d'un procédé d'authentification selon l'invention.

Le procédé 200, représenté sur la FIGURE 2, peut être mis en oeuvre pour authentifier un utilisateur souhaitant accéder :
- à une application web, dite application distante, hébergée sur un serveur d'application, avec un premier appareil utilisateur ; ou
- à une application locale installée sur ledit premier appareil utilisateur ; ou encore
- audit premier appareil, en vue d'ouvrir une session sur ledit premier appareil.

Le premier appareil utilisateur peut être tout type d'appareil utilisateur tel qu'un ordinateur, une tablette, un téléphone, une télévision, etc.

L'application distante peut être tout type d'application, tel que par exemple une suite bureautique, une application de streaming, une application de comptabilité, etc. Elle peut être hébergée sur un serveur d'application accessible au travers d'un réseau de communication tel que par exemple le réseau Internet.

L'application locale peut être tout type d'application, tel que par exemple une suite bureautique, une application de streaming, une application de comptabilité, etc. Elle est installée, et exécutée par, le premier appareil.

Dans tous les cas, le procédé selon l'invention met en oeuvre un client d'authentification, qui se présente sous une forme logicielle.

Lorsque l'invention est utilisée pour authentifier un utilisateur en vue d'un accès au premier appareil, ou à une application locale, le client d'authentification est installée sur ledit premier appareil. Par conséquent, les données échangées avec le client d'authentification, sont échangées avec le premier appareil.

Lorsque l'invention est utilisée pour authentifier un utilisateur en vue d'un accès à une application distante hébergée sur un serveur d'application, le client d'authentification est installée sur ledit serveur d'application. Par conséquent, les données échangées avec le client d'authentification, sont échangées avec le serveur d'application.

Le procédé 200 peut comprendre une étape 202 optionnelle d'émission d'une requête d'accès, formulée sur le premier appareil. L'étape 202 peut faire partie ou non du procédé selon l'invention, et en particulier du procédé 200 de la FIGURE 2.

Lorsque l'invention est utilisée pour authentifier un utilisateur en vue d'un accès au premier appareil, ou à une application locale, ladite étape de requête d'accès peut être réalisée au travers du client d'authentification installée sur ledit premier appareil.

Lorsque l'invention est utilisée pour authentifier un utilisateur en vue d'un accès à une application distante, la requête d'accès peut être formulée au travers d'un navigateur web exécuté par le premier appareil ou d'un module client installé sur le premier appareil.

Dans tous les cas, la requête d'accès est formulée sur le premier appareil.

Le procédé 100 selon l'invention comprend une phase d'authentification 210 de l'utilisateur.

Tel que décrit plus haut, selon l'invention, cette phase d'authentification 210 sera réalisée avec le concourt d'un deuxième appareil utilisateur qui a été préalablement enrôlé avec un serveur d'authentification, par exemple par la phase d'enrôlement 100 de la FIGURE 1.

Dans le cas d'un accès à une application distante hébergées sur un serveur d'application, le serveur d'authentification peut être le même serveur que le serveur d'application. Dans la suite, et sans perte de généralité, il est considéré que le serveur d'application et le serveur d'authentification sont des serveurs différents et qui peuvent communiquer entre eux au travers d'un réseau de communication, tel que par exemple le réseau Internet.

La phase d'authentification 210 comprend une étape 212 d'émission, au serveur d'authentification, d'une requête d'authentification de l'utilisateur, par le client d'authentification du premier appareil ou de l'application,.

Si le client d'authentification se trouve sur le premier appareil, la requête d'authentification peut être émise directement audit serveur d'authentification depuis ledit premier appareil.

Si le client d'authentification se trouve sur le serveur d'application, la requête d'authentification peut être émise vers le serveur d'authentification depuis ledit serveur d'application suite à la réception de la demande d'accès, pour le compte de l'utilisateur.

Dans tous les cas, le client d'authentification peut proposer à l'utilisateur plusieurs options d'authentification dont celle de la présente invention. Dans ce cas, la requête d'authentification est émise vers le serveur d'authentification lorsque l'utilisateur choisit une solution d'authentification selon la présente invention.

La requête d'authentification peut comprendre un identifiant de l'utilisateur. L'identifiant de l'utilisateur peut être renseigné par l'utilisateur lors de l'étape 202 d'émission de la demande d'accès. Alternativement, l'identifiant de l'utilisateur peut avoir été préalablement mémorisé dans le premier appareil utilisateur, par exemple lors d'une précédente phase d'authentification. Suivant encore une autre alternative, l'identifiant de l'utilisateur peut avoir été préalablement mémorisé dans le serveur d'application, le cas échéant, par exemple lors d'une précédente phase d'authentification

Suivant une alternative, la requête d'authentification ne comprend pas l'identifiant de l'utilisateur.

De manière générale, la requête d'authentification peut optionnellement comprendre une combinaison quelconque des données suivantes :
- l'identifiant de l'utilisateur, s'il est connu. Un identifiant « vide » peut aussi être transmis ;
- un attribut définissant si l'utilisateur qui doit s'authentifier doit être celui correspondant à l'identifiant transmis, ou si un autre utilisateur peut s'authentifier. Le serveur d'authentification peut systématiquement transmettre l'identifiant effectivement utilisé lorsque la phase d'authentification 210 de l'utilisateur sera accomplie. Cet attribut peut être nécessaire lorsqu'il y a réauthentification de l'utilisateur déjà connecté ou lorsque l'authentification fait partie d'une authentification chainée (authentification par mot de passe suivi d'une authentification mobile, par exemple) ;
- une information de contexte client, noté Cxc, pour identifier la transaction par le serveur d'application ou l'application client ;
- des informations textuelles permettant de décrire les motifs de l'authentification, le nom du serveur, le nom de l'application, et des informations techniques autres.

Lors d'une étape 214, réalisée après réception de la requête d'authentification, le serveur d'authentification retourne un message, appelé premier message, contenant :
- une URL d'une page d'authentification de l'utilisateur ;
- un identifiant de transaction, de préférence unique et non rejouable, qui correspondant à la transaction d'authentification en cours ; et
- éventuellement, l'identifiant de l'utilisateur lorsqu'il est connu.

Par exemple, l'URL de la page d'authentification, l'identifiant de transaction, et l'identifiant de l'utilisateur le cas échéant, peuvent être encodé dans une URL, dite URL enrichie, se présentant sous la forme d'une chaîne de caractère.

Optionnellement, le premier message peut en outre comprendre :
- une information de contexte d'authentification, noté Cxa, sous la forme d'une chaîne de caractères, et qui peut être utilisé pour obtenir le résultat de l'authentification lorsqu'elle sera réalisée ou non par le deuxième appareil utilisateur ; et
- l'éventuel contexte client, Cxc, qui permet d'identifier la transaction.

Le premier message est envoyé au client d'authentification par le serveur d'authentification.

Si le client d'authentification se trouve sur le premier appareil, alors le premier message est envoyé par le serveur d'authentification au premier appareil.

Si le client d'authentification se trouve sur le serveur d'application, alors le premier message est envoyé par le serveur d'authentification au serveur d'application.

Lors d'une étape 216, réalisée après réception du premier message, l'URL enrichie, c'est-à-dire l'URL de la page d'authentification et l'identifiant de transaction, est transmise au deuxième appareil utilisateur, préalablement enrôlé auprès du serveur d'authentification.

L'URL enrichie peut être transmise au deuxième appareil par le serveur d'authentification, par le serveur d'application ou par le premier appareil.

L'URL enrichie peut être transmise au deuxième appareil de différentes manières, telle que par exemple sous la forme d'un courriel ou d'un message téléphonique, émis par le premier appareil ou le serveur d'application.

Avantageusement, l'URL enrichie peut être transmise au deuxième appareil sous la forme d'un QR-code, affiché sur un écran d'affichage du premier appareil et scanné/photographié par le deuxième appareil utilisateur.

Le QR-code peut être construit/encodé par le premier appareil.

Alternativement, l'URL enrichie peut être encodé en QR-code par le serveur d'authentification. Dans ce cas, le premier message peut comprendre, ou consister en, ledit QR-code.

Alternativement, l'URL enrichie peut être encodé en QR-code par le serveur d'application et transmis au premier appareil par ledit serveur d'application.

Lors d'une étape 218, le deuxième appareil ouvre l'URL enrichie pour accéder à la page d'authentification, dans un navigateur web exécuté par ledit deuxième appareil utilisateur. L'ouverture de ladite URL peut être réalisée manuellement par l'utilisateur qui clique/sélectionne ledit URL dans un message. Alternativement, l'ouverture de ladite URL peut être proposée de manière automatisée, ou être réalisée de manière automatisée, par exemple lorsque l'utilisateur scanne un QR-code affiché par le premier appareil et dans lequel est encodé ledit URL.

L'ouverture de l'URL enrichie par dans le deuxième appareil utilisateur provoque :
- l'affichage de la page d'authentification du serveur d'authentification, dans un navigateur exécuté dans le deuxième appareil utilisateur ; et
- la transmission au serveur d'authentification :
   ▪de l'identifiant unique de la transaction d'authentification,
   ▪et optionnellement, de l'identifiant de l'utilisateur.

Optionnellement, le serveur d'authentification peut vérifier la validité de l'identifiant unique de la transaction et ne retourner le contenu de la page d'authentification que lorsque ledit identifiant est valide.

Optionnellement, le serveur d'authentification obtient des données associées à cette transaction, à savoir une combinaison quelconque des données suivantes :
- l'identifiant de l'utilisateur à authentifier, s'il est connu ;
- un ou des identifiants utilisateurs enregistrés par le navigateur sous forme de cookie permanent sécurisés ou depuis le stockage local du navigateur ;
- l'obligation (ou non) d'authentifier spécifiquement cet utilisateur ;
- éventuellement des données textuelles à afficher dans la page Web d'authentification.

Le navigateur du deuxième appareil utilisateur affiche la page d'authentification, c'est-à-dire la page associée à l'URL d'authentification générée par le serveur d'application suite à la requête d'authentification. L'identifiant de l'utilisateur est inséré dans la page par le navigateur :
- soit parce qu'il est transmis par le serveur d'authentification ;
- soit parce qu'il est présent dans l'URL, par exemple comme un « login_hint » ;
- soit parce que le navigateur du deuxième appareil s'en souvient ;
- soit par une lecture dans les données du stockage local du navigateur du deuxième appareil ;
- soit par ce qu'il est saisi par l'utilisateur ;

Optionnellement, si l'utilisateur possède plusieurs identifiants, il en choisit un, ou il conserve celui qui est déjà présent dans l'affichage de la page d'authentification.

Optionnellement, l'utilisateur vérifie les informations présentées dans la page.

Lors d'une étape 220, la page d'authentification déclenche le mécanisme d'authentification de l'utilisateur, et en particulier une authentification FIDO ou par certificat client.

Ce mécanisme d'authentification nécessite une vérification de l'identité de l'utilisateur, par le deuxième appareil et localement audit deuxième appareil, pour s'assurer que l'utilisateur est bien autorisé à utiliser :
- la clef, ou le certificat de sécurité ;
- et plus généralement la preuve d'enrôlement générée lors de l'enrôlement de cet appareil auprès du serveur d'authentification ;
mémorisé(e) dans ledit deuxième appareil.

Ainsi, lors d'une étape 222, une vérification de l'identité de l'utilisateur est réalisée localement au niveau du deuxième appareil. Cette vérification a pour rôle de s'assurer que l'utilisateur est connu du deuxième appareil et est autorisé à utiliser le deuxième appareil. Cette vérification réalise une comparaison d'une donnée de sécurité entrée par l'utilisateur lors de cette étape de vérification à une donnée de sécurité préalablement mémorisée au niveau dudit deuxième appareil.

Cette donnée de sécurité peut être de tout type, tel qu'un code de sécurité, PIN-Code, un mot de passe, une donnée biométrique de visage, également connue sous le nom de Face-ID, une empreinte digitale, une donnée rétinienne, donnée vocale, etc.

Cette donnée de sécurité est totalement indépendante du serveur d'authentification, de l'application web, etc. Cette donnée de sécurité n'est pas, et ne sera pas connue, par le serveur d'authentification.

Suivant des modes de réalisation préférés, cette donnée de sécurité peut correspondre à la donnée de sécurité utilisée pour déverrouiller le deuxième appareil.

Il est rappelé que cette étape de vérification 222 a pour but de vérifier que l'utilisateur peut utiliser le deuxième appareil, et donc qu'il peut utiliser la preuve d'enrôlement mémorisée au niveau dudit deuxième appareil.

Si l'identité de l'utilisateur a été vérifiée avec succès par le deuxième appareil, alors cela veut dire que cet utilisateur est autorisé à utiliser la preuve d'enrôlement mémorisée dans ledit deuxième appareil pour s'authentifier auprès du serveur d'authentification. Dans ce cas, lors d'une étape 224, le protocole d'authentification, par exemple le protocole WebAuthn ou le protocole SSL, établit une connexion de sécurité entre le navigateur du deuxième appareil et le serveur d'authentification et transmet la preuve d'enrôlement préalablement mémorisée dans le deuxième appareil, et éventuellement l'identifiant de l'utilisateur, dans un deuxième message. Ce deuxième message peut en outre comprendre des données contextuelles de la vérification de l'identité de l'utilisateur, tel que par exemple la méthode de vérification, la géolocalisation, etc.

L'utilisateur est alors authentifié avec succès auprès du serveur d'authentification.

Lors d'une étape optionnelle 226, le serveur d'authentification peut vérifier que la transaction d'authentification est toujours valide et/ou que l'utilisateur authentifié correspond à l'utilisateur demandé.

Lors d'une étape 228, le serveur d'authentification confirme l'authentification de l'utilisateur au client d'authentification. Cette confirmation est envoyée au premier appareil si le client d'authentification se trouve sur ledit premier appareil, et/ou au serveur d'application si le client d'authentification se trouve sur ledit serveur d'application, sous la forme d'un troisième message.

Ce troisième message comprend une donnée de confirmation de l'authentification. Ce troisième message peut en outre comprendre une combinaison quelconque des données suivantes :
- l'identifiant de l'utilisateur authentifié, en particulier s'il n'est pas déjà connu du premier appareil ou du serveur d'application ;
- des données obtenues du navigateurs du deuxième appareil, telles que par exemple le type de navigateur, adresse IP et géolocalisation si disponible, etc. : ces données peuvent être ou comprendre des données se trouvant dans le deuxième message transmis par le deuxième appareil au premier appareil ;
- des données relatives au contexte client Cxc
- etc.

Après réception du troisième message avec la donnée de confirmation de l'authentification, la phase d'authentification 210 se termine. L'accès demandé par l'utilisateur est autorisé. Lors d'une étape 230 la session de l'utilisateur correspondant à l'identifiant utilisateur est démarrée : il s'agit soit d'une session d'accès au premier appareil, soit d'une session d'une application locale, ou encore d'une session d'une application distante. Le démarrage de cette session est réalisé en mettant en oeuvre les techniques propres, respectivement :
- au premier appareil, dans le cas d'un accès audit appareil ;
- à l'application locale dans le cas d'un accès à ladite application locale,
- au serveur d'application(s) : La technique d'accès peut être tout type de technique, par exemple une technique d'accès utilisant un cookie de session, un jeton, un protocole OAuth, ...etc.

Le procédé 200 peut en outre comprendre au moins une itération d'une phase d'enrôlement, tel que par exemple la phase d'enrôlement 100 de la FIGURE 1, pour enrôler un appareil utilisateur comme deuxième appareil.

La phase d'enrôlement 100 peut être réalisée juste avant une phase d'authentification, ou bien indépendamment de la réalisation d'une phase d'authentification.

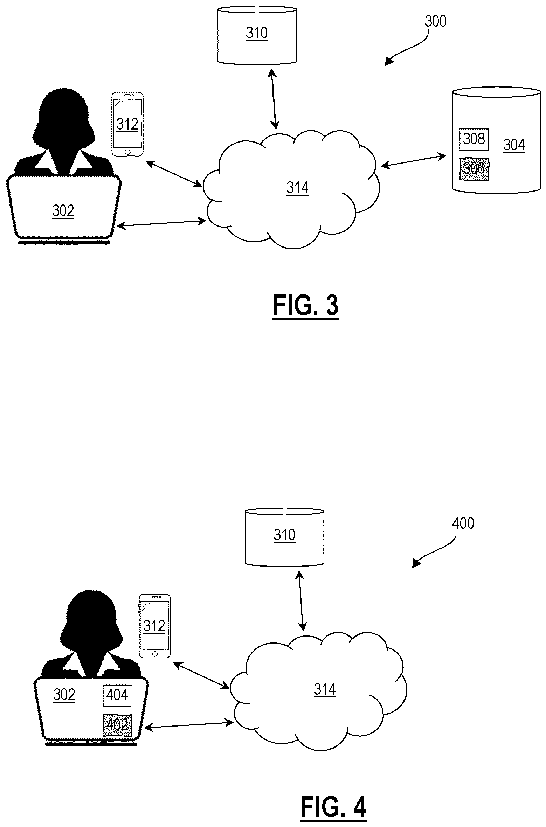

La FIGURE 3 est une représentation schématique d'un exemple de réalisation non limitatif d'un système d'authentification selon l'invention.

Le système 300, représenté sur la FIGURE 3, peut être mis en oeuvre pour authentifier un utilisateur souhaitant accéder à une application web, également appelée application distante, par un navigateur web ou une application client.

Le système 300 comprend au moins un premier appareil 302, qui peut être tout type d'appareil connecté tel qu'une télévision, un ordinateur, une tablette, une voiture, etc.

Le système 300 comprend en outre un serveur d'application 304 accessible par le premier appareil 302 au travers d'un réseau de communication. Ce serveur d'application 304 héberge l'application web 306 à laquelle l'utilisateur souhaite accéder, et un client d'authentification 308.

Le système 300 comprend en outre un serveur d'authentification 310 pour authentifier l'utilisateur et déterminer si l'utilisateur a le droit d'accéder ou non à l'application web 306.

Enfin, le système comprend un deuxième appareil 312, qui peut être tout type d'appareil connecté tel qu'une tablette, un smartphone, etc. capable d'exécuter un navigateur web.

Le premier appareil 302, le serveur d'application 304, le serveur d'authentification 310 et le deuxième appareil 312 sont reliés à un réseau de communication 314, par exemple l'Internet, pour communiquer entre eux.

Le système 300 est configuré pour mettre en oeuvre les étapes du procédé selon l'invention, et en particulier le procédé 200 de la FIGURE 2, lorsqu'il est utilisé pour authentifier un utilisateur en vue d'un accès à une application distante.

Dans l'exemple représenté, le serveur d'application 304 et le serveur d'authentification 310 sont indépendants. Suivant une alternative, le serveur d'application 304 et le serveur d'authentification 310 peuvent être un même serveur.

De plus, de préférence le premier appareil 302 et le deuxième appareil 312 se trouvent sur un même site. Bien entendu, suivant une alternative, le premier appareil 302 et le deuxième appareil 312 peuvent se trouver sur des sites différents.

La FIGURE 4 est une représentation schématique d'un autre exemple de réalisation non limitatif d'un système d'authentification selon l'invention.

Le système 400, représenté sur la FIGURE 4, peut être mis en oeuvre pour authentifier un utilisateur souhaitant accéder à une application locale.

Le système 400 comprend tous les éléments du système 300 de la FIGURE 3, sauf le serveur d'application 304.

En particulier, le système 400 comprend le premier appareil 302 exécutant une application locale 402 à laquelle l'utilisateur souhaita accéder.

Le premier appareil comprend aussi un client d'authentification 404, gérant l'accès à l'application locale 402.

Le système 400 comprend en outre le serveur d'authentification 310 pour authentifier l'utilisateur et déterminer si l'utilisateur a le droit d'accéder ou non à l'application locale 402.

Enfin, le système comprend un deuxième appareil 312, qui peut être tout type d'appareil connecté tel qu'une tablette, un smartphone, etc. capable d'exécuter un navigateur web.

Le système 400 est configuré pour mettre en oeuvre les étapes du procédé selon l'invention, et en particulier le procédé 200 de la FIGURE 2, lorsqu'il est utilisé pour authentifier un utilisateur en vue d'un accès à une application locale.

La FIGURE 5 est une représentation schématique d'un autre exemple de réalisation non limitatif d'un système d'authentification selon l'invention.

Le système 500, représenté sur la FIGURE 5, peut être mis en oeuvre pour authentifier un utilisateur souhaitant accéder à un appareil, c'est à dire ouvrir une session sur ledit appareil.

Le système 500 comprend tous les éléments du système 400 de la FIGURE 4, sauf l'application locale 402 et le client d'authentification 404 de l'application locale.

En particulier, le système 500 comprend le premier appareil 302 exécutant.

Le premier appareil 302 comprend un client d'authentification 502, gérant l'accès audit premier appareil 302, c'est-à-dire à ouvrir une session sur ledit appareil.

Le système 500 comprend en outre le serveur d'authentification 310 pour authentifier l'utilisateur et déterminer si l'utilisateur a le droit d'accéder ou non à l'appareil 302.

Enfin, le système comprend un deuxième appareil 312, qui peut être tout type d'appareil connecté tel qu'une tablette, un smartphone, etc. capable d'exécuter un navigateur web.

Le système 500 est configuré pour mettre en oeuvre les étapes du procédé selon l'invention, et en particulier le procédé 200 de la FIGURE 2, lorsqu'il est utilisé pour authentifier un utilisateur en vue d'un accès au premier appareil 302.

Bien entendu, ces exemples sont donnés à titre d'exemples particuliers uniquement et l'invention n'est pas limitée aux exemples détaillés ci-dessus. De nombreuses variantes peuvent être imaginées aux exemples donnés ci-dessus sans sortir du cadre de l'invention telle que définie dans les revendications principales.

## Revendications

1. Procédé (200) d'authentification d'un utilisateur auprès d'un serveur d'authentification (310), pour accéder à un premier appareil utilisateur (302) ou à une application (306;402) avec ledit premier appareil (302), ledit procédé (200) comprenant au moins une itération d'une phase d'authentification (210) comprenant les étapes suivantes :
- émission (212), par un client d'authentification (308;404;502) dudit premier appareil (302) ou de ladite application (306;402), audit serveur d'authentification (310), d'une requête d'authentification,
- en réponse à ladite requête d'authentification, émission (216) par le serveur d'authentification (310) d'un premier message comprenant une URL d'authentification et un identifiant de transaction,
- ouverture (218) de ladite URL dans un navigateur web exécuté par un deuxième appareil utilisateur (312), préalablement enrôlé auprès dudit serveur d'authentification (310),
- vérification (222) de l'identité dudit utilisateur par ledit deuxième appareil utilisateur (312), et
- lorsque ladite vérification est réussie, fourniture (224) par ledit deuxième appareil utilisateur (312) audit serveur d'authentification (310), d'une preuve d'enrôlement mémorisée dans ledit deuxième appareil (312) lors de l'enrôlement dudit deuxième appareil (312), pour authentifier ledit utilisateur.

2. Procédé (200) selon la revendication précédente, **caractérisé en ce qu'**il comprend avant la première itération de la phase d'authentification (210), une phase (100) d'enrôlement du deuxième appareil (312) après du serveur d'authentification (310) en association avec l'utilisateur, ladite phase d'enrôlement (100) produisant une preuve d'enrôlement mémorisée dans ledit deuxième appareil utilisateur (312).

3. Procédé (200) selon la revendication précédente, **caractérisé en ce que** la phase d'enrôlement (100) réalise :
- un enrôlement de type FIDO auprès du serveur d'authentification (310), dont la clef privée est enregistrée dans le deuxième appareil (312) ; ou
- un enrôlement de type certificat client X509 dont le nom, et/ou le numéro de série, est enregistré dans le serveur d'authentification (310) et dont la clef privée est enregistrée dans le deuxième appareil (312).

4. Procédé (200) selon l'une quelconque des revendications précédentes, **caractérisé en ce que** la phase d'enrôlement (100) comprend en outre une mémorisation, dans ledit deuxième appareil utilisateur (312), d'un identifiant dudit utilisateur.

5. Procédé (200) selon l'une quelconque des revendications 2 à 4, **caractérisé en ce que** la phase d'enrôlement (100) est réalisée au travers d'une page web d'enrôlement ouverte dans un navigateur exécuté par le deuxième appareil utilisateur (312).

6. Procédé (200) selon l'une quelconque des revendications précédentes, **caractérisé en ce que** l'URL d'authentification et l'identifiant de transaction sont transmis au deuxième appareil (312) par le premier appareil (302).

7. Procédé (200) selon l'une quelconque des revendications précédentes, **caractérisé en ce que** la transmission de l'URL d'authentification et de l'identifiant de transaction au deuxième appareil (312) est réalisée au travers d'un QR Code affiché au niveau du, ou par le, premier appareil (302) et scanné par ledit deuxième appareil (312).

8. Procédé (200) selon l'une quelconque des revendications précédentes, **caractérisé en ce que** l'étape (222) de vérification de l'identité de l'utilisateur par le deuxième appareil (312) comprend une fourniture, par ledit utilisateur audit deuxième appareil (312), d'une donnée de sécurité préalablement mémorisée dans ledit deuxième appareil (312), tel que par exemple un mot de passe ou une donnée biométrique pour déverrouiller ledit deuxième appareil (312).

9. Procédé (200) selon l'une quelconque des revendications précédentes, **caractérisé en ce que** la phase d'authentification (210) comprend en outre, après une vérification réussie de l'identité de l'utilisateur par le deuxième appareil (312), une étape (224) d'émission par ledit deuxième appareil (312) audit serveur d'authentification (310) d'un deuxième message comprenant :
- l'identifiant de transaction,
- la preuve d'enrôlement mémorisée au niveau dudit deuxième appareil (312), et
- et éventuellement un identifiant d'utilisateur et/ou une preuve de vérification.

10. Procédé (200) selon l'une quelconque des revendications précédentes, caractérisé en que la phase d'authentification (210) comprend, suite une authentification réussie, une étape (228) de confirmation d'authentification par le serveur d'authentification (310), comprenant une émission par ledit serveur d'authentification (310) au client d'authentification (308;404;502) d'un troisième message comprenant une donnée de confirmation d'authentification et éventuellement un identifiant de l'utilisateur.

11. Procédé (200) selon l'une quelconque des revendications précédentes, **caractérisé en ce qu'**il comprend, suite à la phase d'authentification (210), une étape (230) d'ouverture, pour l'utilisateur, d'une session de l'application web sur le serveur d'application (304), en cas d'authentification réussie.

12. Programme d'ordinateur comprenant des instructions informatiques, qui lorsqu'elles sont exécutées par ordinateur, mettent en oeuvre les étapes du procédé (200) selon l'une quelconque des revendications précédentes.

13. Système (300;400;500) d'authentification d'un utilisateur auprès d'un serveur d'authentification (310), pour accéder à un premier appareil utilisateur (302) ou à une application (306;402) avec ledit premier appareil (302), ledit système (300;400;500) comprenant :
- un premier appareil utilisateur (302),
- un serveur d'authentification (310),
- un deuxième appareil utilisateur (312) comprenant un navigateur web ; et
- un client d'authentification (308;404;502) ;
configurés pour mettre en oeuvre toutes les étapes du procédé (200) selon l'une quelconque des revendications 1 à 11.
